# EUROPEAN PATENT SPECIFICATION

(11) **EP 3 694 248 B1**
(45) Date of publication and mention of the grant of the patent: **25.09.2024**
(21) Application number: 18873893.4
(22) Date of filing: 30.10.2018
(51) Int. Cl.: H04L 1/18, H04W 28/04, H04B 7/0452

(54) **RESPONSE FRAME DELAY DURATION SETTING METHOD, DEVICE, AND SYSTEM**
VERFAHREN, VORRICHTUNG UND SYSTEM ZUR EINSTELLUNG DER VERZÖGERUNGSDAUER EINES ANTWORTRAHMENS
PROCÉDÉ, DISPOSITIF ET SYSTÈME DE RÉGLAGE DE DURÉE DE RETARD DE TRAME DE RÉPONSE

(30) Priority: 02.11.2017 CN 201711064953
(43) Date of publication of application: 12.08.2020
(73) Proprietor: Huawei Technologies Co., Ltd., Longgang District Shenzhen, Guangdong 518129 (CN)
(72) Inventor: CHEN, Guohai, Shenzhen Guangdong 518129 (CN)
(74) Representative: Gill Jennings & Every LLP
(86) International application number: PCT/CN2018/112709
(87) International publication number: WO 2019/085900

(56) References cited:
- EP-A1- 2 693 816
- EP-A1- 3 242 528
- EP-A1- 3 440 790
- WO-A1-2016/107524
- WO-A1-2016/176595
- WO-A1-2016/176595
- WO-A1-2017/176183
- WO-A2-2009/031866
- CN-A- 105 813 131
- CN-A- 106 102 183
- US-A1- 2011 176 627

## Description

### TECHNICAL FIELD

This application relates to the field of wireless communications technologies, and in particular, to an acknowledgment frame delay duration setting method and apparatus.

### BACKGROUND

To meet increased bandwidth requirements of a wireless communications system, a multiple-input multiple-output (Multiple-Input Multiple-Output, MIMO) technology is used in several emerging wireless communications standards such as the Institute of Electrical and Electronics Engineers (IEEE) 802.11 standard, so that a plurality of mobile stations (Station, STA) communicate with one or more access points (Access Point, AP) by sharing a channel resource, to achieve a high data throughput.

To improve reliability of MIMO communication, when a STA receives a data frame (Packet) sent by an AP, the STA needs to feed back an acknowledgment (ACK) frame to the AP to notify the AP that the STA has received the data frame.

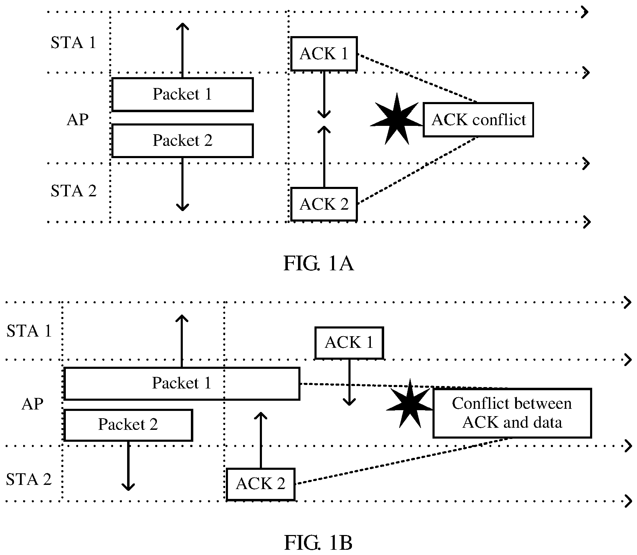

During actual application, a same AP may perform concurrent data transmission with different STAs, and interference is likely to be caused due to the concurrent data transmission. FIG 1A is a schematic diagram of a conflict between acknowledgment frames according to an example implementation of this application. As shown in FIG 1A, when an AP simultaneously receives acknowledgment frames fed back by a plurality of STAs, a conflict (interference) is caused between the acknowledgment frames received by the AP. FIG 1B is a schematic diagram of a conflict between an acknowledgment frame and a data frame according to an example implementation of this application. As shown in FIG 1B, when an AP receives, in a process of sending a data frame to a STA 1, an acknowledgment frame fed back by a STA 2, a conflict (interference) is caused between the acknowledgment frame and the data frame.

Due to interference caused between data, an AP is likely to incorrectly determine that the AP receives no acknowledgment frame sent by a STA, in other words, determine that a data frame sent to the STA is lost. Consequently, the AP subsequently polls on the STA whether the STA receives the data frame, causing a waste of wireless communications resources.

WO2016107524 relates to data transmission method, acquisition method, transmission apparatus and acquisition apparatus.

### SUMMARY

This application discloses an acknowledgment frame delay duration setting method and apparatus, to resolve a problem in a related technology.

The invention has been defined in the independent claims. Further specific technical features have been defined in the dependent claims.

Because STAs in a same group usually have different acknowledgment frame delay duration, a same AP does not simultaneously receive acknowledgment frames sent by STAs in a same group. This prevents an AP from incorrectly determining, due to a conflict between an acknowledgment frame and a data frame and a conflict between acknowledgment frames, that the AP receives no acknowledgment frame sent by a STA, thereby eliminating polling overheads of the AP, and avoiding a waste of wireless communications resources.

Based on certain principles disclosed in the present disclosure, overheads of a frame preamble, a frame header, and the like are reduced due to use of an aggregated frame, so that network overheads can be effectively reduced.

Based on certain principles disclosed in the present disclosure, a MIMO controller may separately set a use count of the acknowledgment frame delay duration, to control a quantity of times the STA uses the acknowledgment frame delay duration after receiving a data frame.

### BRIEF DESCRIPTION OF DRAWINGS

FIG 1A is a schematic diagram of a conflict between acknowledgment frames according to an example implementation of this application;
FIG 1B is a schematic diagram of a conflict between an acknowledgment frame and a data frame according to an example implementation of this application;
FIG 2A is a schematic diagram of a system architecture of an acknowledgment frame delay duration setting system to which an implementation of this application is applied;
FIG 2B is a schematic diagram of a manner in which an AP is connected to a MIMO controller and to which an implementation of this application is applied;
FIG 3 is a schematic structural diagram of a network device to which an example implementation of this application is applied;
FIG 4 is a schematic structural diagram of a STA to which an example implementation of this application is applied;
FIG 5A is a flowchart of an acknowledgment frame delay duration setting method according to an example implementation of this application;
FIG 5B is a schematic diagram of acknowledgment frames received by a first AP according to an example implementation of this application;
FIG 6A and FIG 6B are a flowchart of an acknowledgment frame delay duration setting method according to another example implementation of this application;
FIG 7A and FIG 7B are a flowchart of an acknowledgment frame delay duration setting method according to still another example implementation of this application;
FIG 8 is a flowchart of an acknowledgment frame delay duration setting method according to yet another example implementation of this application;
FIG 9A and FIG 9B are a schematic diagram of comparison between an existing data transmission procedure and a data transmission procedure in this application according to an example implementation of this application;
FIG 10 is a possible schematic structural diagram of a network device according to an implementation of this application;
FIG 11 is a simplified schematic diagram of a possible design structure of a STA according to an implementation of this application;
FIG 12A is a block diagram of an acknowledgment frame delay duration setting apparatus according to an implementation of this application;
FIG 12B is a block diagram of an acknowledgment frame delay duration setting apparatus according to an implementation of this application;
FIG 13A is a block diagram of an acknowledgment frame delay duration setting apparatus according to another implementation of this application; and
FIG 13B is a block diagram of an acknowledgment frame delay duration setting apparatus according to another implementation of this application.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

A "module" mentioned in this specification is a program or an instruction that is stored in a memory and that can implement some functions. A "unit" mentioned in this specification is a functional structure obtained through logic-based division. The "unit" may be implemented by only hardware, or implemented by a combination of software and hardware.

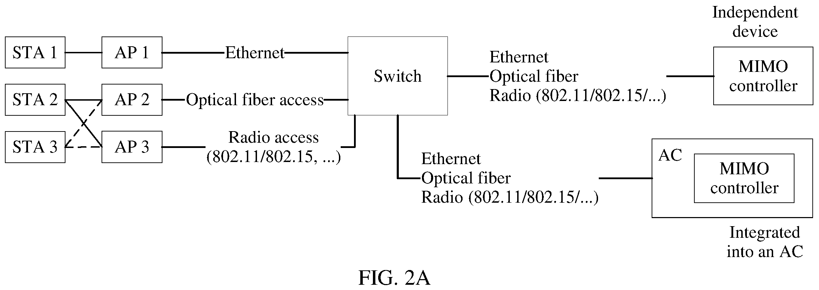

FIG 2A is a schematic diagram of a system architecture of an acknowledgment frame delay duration setting system to which an implementation of this application is applied. An acknowledgment frame delay duration setting method in this application is applied to the acknowledgment frame delay duration setting system. The acknowledgment frame delay duration setting system includes a plurality of network devices and a plurality of STAs. The network device includes at least one MIMO controller and at least one AP.

The AP is wirelessly connected to the STA, and the AP is connected to the MIMO controller by using a switch. The switch is connected to both the AP and the MIMO controller in a wired/wireless manner. A wired connection manner includes an optical fiber connection and an Ethernet connection.

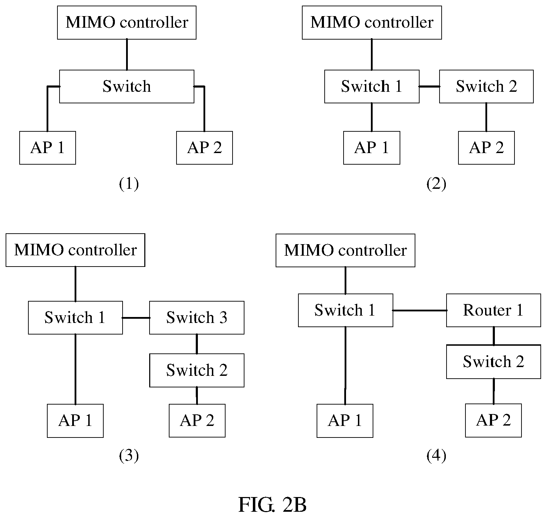

It should be noted that, a quantity of switches between the AP and the MIMO controller is not limited in the system architecture of the acknowledgment frame delay duration setting system. FIG 2B is a schematic diagram of a manner in which an AP is connected to a MIMO controller and to which an implementation of this application is applied. The AP is connected to the MIMO controller by using one switch (as shown in FIG 2B (1), both an AP 1 and an AP 2 are connected to a MIMO controller by using one switch), or by using a plurality of switches (as shown in FIG 2B (2), an AP 2 is connected to a MIMO controller by using two switches; and as shown in FIG 2B (3), an AP 2 is connected to a MIMO controller by using three switches). When the AP is connected to the MIMO controller by using a plurality of switches, every two switches may be directly connected (as shown in FIG 2B (2), a switch 1 is directly connected to a switch 2; and as shown in FIG 2B (3), a switch 3 is directly connected to both a switch 1 and a switch 2), or may be connected by using a router (as shown in FIG 2B (4), a switch 1 is connected to a switch 2 by using a router 1). A connection between switches and a connection between a switch and a router are wired/wireless connections.

The MIMO controller may be an independent device or may be integrated into an access point controller (Access Point Controller, AC). When the MIMO controller is an independent device, the MIMO controller usually runs on a general-purpose computer, for example, runs on a central processing unit (Central Processing Unit, CPU) of the computer, and performs hardware (such as a CPU hard core, a graphics processing unit (Graphics Processing Unit, GPU), or a field programmable gate array (FieldProgrammable Gate Array, FPGA)) acceleration. When the MIMO controller is integrated into an AC, the MIMO controller is usually used as a functional module of the AC. The MIMO controller communicates with an AP by using a communications tunnel between the AP and the AC.

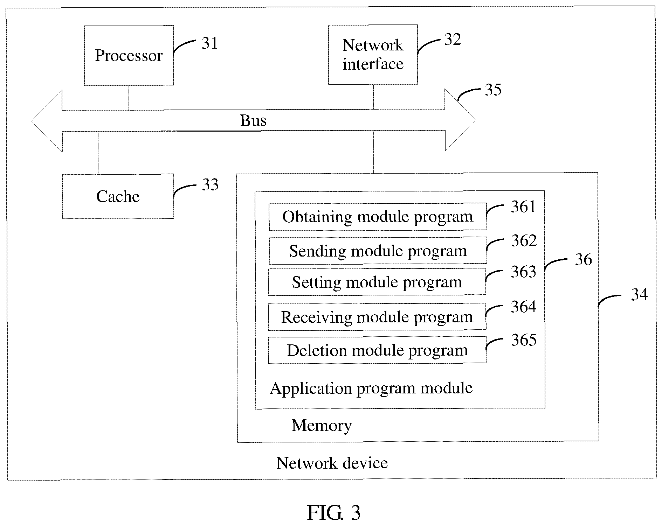

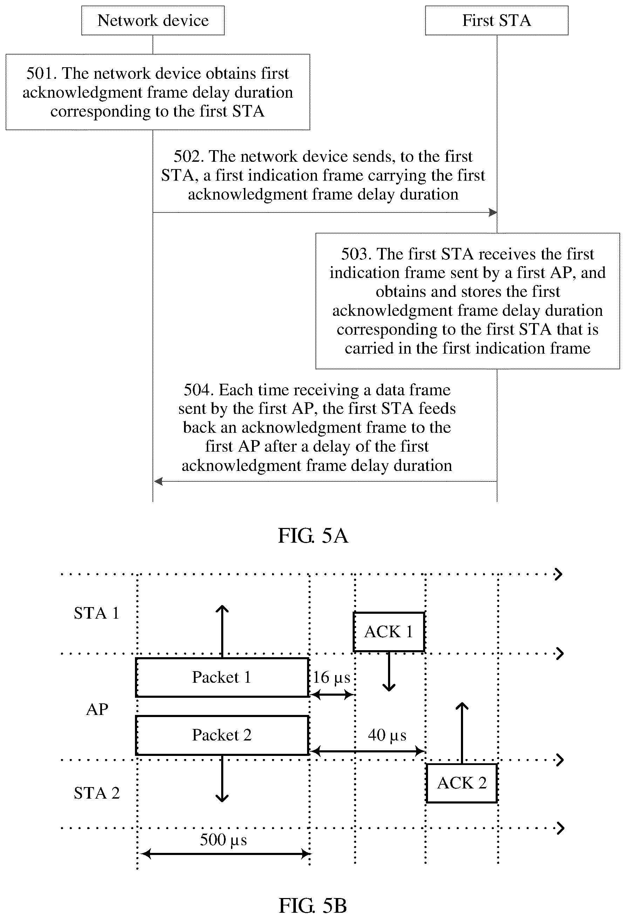

FIG 3 is a schematic structural diagram of a network device to which an example implementation of this application is applied. The network device is not claimed as such in the present application. The methods described with reference to figures 5A-5B, 6A-6B, 7A-7B, and 8 should be construed accordingly.

The network device includes a processor 31, a network interface 32, a cache 33, a memory 34, and a bus 35.

The processor 31 includes one or more processing cores. The processor 31 runs a software program and a module, to implement various functional applications and data processing.

The network interface 32 is used by the network device to communicate with another network device.

The memory 34 and the cache 33 are both connected to the processor 31 through the bus 35.

The memory 34 may be configured to store the software program and the module.

The memory 34 may store an application program module 36 required by at least one function. The application program module 36 includes at least an obtaining module program 361, a sending module program 362, a setting module program 363, a receiving module program 364, and a deletion module program 365.

The obtaining module program 361 is configured to: obtain first acknowledgment frame delay duration corresponding to a first mobile station STA; and obtain second acknowledgment frame delay duration corresponding to a second STA, where the second STA and the first STA are STAs in a same group.

The sending module program 362 is configured to: send, to the first STA, a first indication frame carrying the first acknowledgment frame delay duration, so that the first STA feeds back an acknowledgment frame after a delay of the first acknowledgment frame delay duration when receiving a data frame; send, to the second STA, a second indication frame carrying the second acknowledgment frame delay duration, so that the second STA feeds back an acknowledgment frame after a delay of the second acknowledgment frame delay duration when receiving a data frame; send the first acknowledgment frame delay duration to a first access point AP, so that the first AP forwards the first acknowledgment frame delay duration to the first STA, where the first AP is an AP associated with the first STA; send a use count to the first AP, so that the first AP forwards the use count to the first STA; send, to the first STA in a form of an aggregated frame, the first indication frame carrying the first acknowledgment frame delay duration, where the aggregated frame further includes a data frame; after sending the data frame to the first STA, re-send the data frame to the first STA if no data frame fed back by the first STA is received within first acknowledgment timeout duration; and when a first acknowledgment timeout duration cancelation message for the first STA that is sent by a MIMO controller is received, send a first acknowledgment frame delay duration cancelation message to the first STA, so that the first STA deletes the stored first acknowledgment frame delay duration.

The setting module program 363 is configured to: before the first acknowledgment frame delay duration corresponding to the first mobile station STA is obtained, allocate the first acknowledgment frame delay duration to the first STA; after allocating the first acknowledgment frame delay duration to the first STA, set the use count of the first acknowledgment frame delay duration; and set, based on the first acknowledgment timeout duration, the first acknowledgment frame delay duration corresponding to the first STA, where the first acknowledgment timeout duration is longer than the first acknowledgment frame delay duration.

The receiving module program 364 is configured to: before the first acknowledgment frame delay duration corresponding to the first mobile station STA is obtained, receive the first acknowledgment timeout duration corresponding to the first STA that is sent by the MIMO controller, and add the first STA and the first acknowledgment timeout duration to a prestored correspondence between a STA and acknowledgment timeout duration.

The deletion module program 365 is configured to delete the first STA and the first acknowledgment timeout duration from the correspondence.

The memory 34 may be implemented by any type of volatile or nonvolatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc.

A person skilled in the art may understand that the structure of the network device shown in FIG 3 constitutes no limitation on the network device, and the network device may include more or fewer components than those shown in the figure, or combine some components, or have different component arrangements.

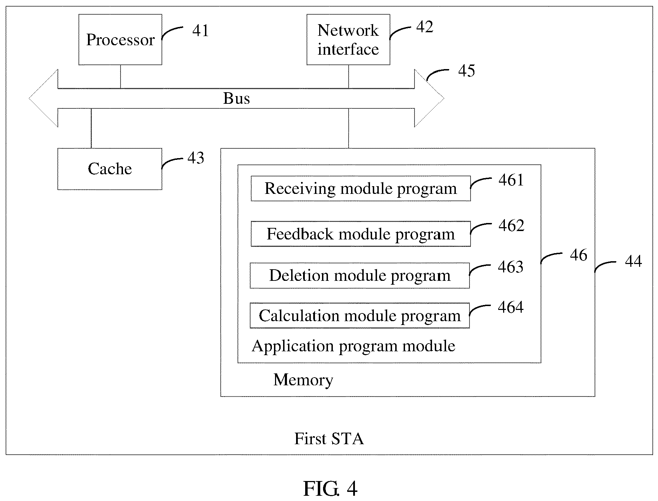

FIG 4 is a schematic structural diagram of a first STA to which an example implementation of this application is applied. The first STA includes a processor 41, a network interface 42, a cache 43, a memory 44, and a bus 45.

The processor 41 includes one or more processing cores. The processor 41 runs a software program and a module, to implement various functional applications and data processing.

The network interface 42 is used by the first STA to communicate with another network device.

The memory 44 and the cache 43 are both connected to the processor 41 through the bus 45.

The memory 44 may be configured to store the software program and the module.

The memory 44 may store an application program module 46 required by at least one function. The application program module 46 includes at least a receiving module program 461, a feedback module program 462, a deletion module program 463, and a calculation module program 464.

The receiving module program 461 is configured to: receive a first indication frame sent by a first AP, and obtain and store first acknowledgment frame delay duration corresponding to the first STA that is carried in the first indication frame, where the first AP is an AP associated with the first STA; and obtain and store the first acknowledgment frame delay duration corresponding to the first STA and a use count corresponding to the first acknowledgment frame delay duration that are carried in the first indication frame.

The feedback module program 462 is configured to: each time a data frame sent by the first AP is received, feed back an acknowledgment frame to the first AP after a delay of the first acknowledgment frame delay duration; subtract 1 from the stored use count corresponding to the first acknowledgment frame delay duration; and if a result obtained after 1 is subtracted from the use count corresponding to the first acknowledgment frame delay duration is less than 0, delete the first acknowledgment frame delay duration and the use count corresponding to the first acknowledgment frame delay duration, and feed back the acknowledgment frame to the first AP after a delay of default delay duration; or if a result obtained after 1 is subtracted from the use count corresponding to the first acknowledgment frame delay duration is not less than 0, feed back the acknowledgment frame to the first AP after a delay of the first acknowledgment frame delay duration.

The deletion module program 463 is configured to: when a first acknowledgment frame delay duration cancelation message sent by the first AP is received, delete, the stored first acknowledgment frame delay duration.

The calculation module program 464 is configured to: each time a data frame sent by the first AP is received, subtract, 1 from the stored use count corresponding to the first acknowledgment frame delay duration.

The memory 44 may be implemented by any type of volatile or nonvolatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc.

A person skilled in the art may understand that the structure of the first STA shown in FIG 4 constitutes no limitation on the first STA, and the first STA may include more or fewer components than those shown in the figure, or combine some components, or have different component arrangements.

### Implementation 1

The network device described with reference to figure 3 is not claimed as such in the present application. The method described in this implementation should be construed accordingly.

FIG 5A is a flowchart of an acknowledgment frame delay duration setting method according to an example implementation of this application. In this implementation, an example in which the method is used in the system architecture of the acknowledgment frame delay duration setting system shown in FIG 2A is used for description. As shown in FIG 5A, the method includes the following several steps.

Step 501: A network device obtains first acknowledgment frame delay duration corresponding to a first STA.

The network device is a MIMO controller or a first AP, and the first AP is an AP associated with the first STA.

When the network device is the MIMO controller, before obtaining the first acknowledgment frame delay duration corresponding to the first STA, the network device allocates the first acknowledgment frame delay duration to the first STA.

Optionally, the MIMO controller allocates the corresponding first acknowledgment frame delay duration to the first STA based on a network delay of the first STA.

When the network device is the first AP, the network device receives the first acknowledgment frame delay duration corresponding to the first STA that is sent by the MIMO controller.

The first STA sends an association request to the first AP. After receiving the association request sent by the first STA, the first AP determines that the first STA is to be associated with the first AP. In this case, the first AP obtains the first acknowledgment frame delay duration corresponding to the first STA.

Step 502: The network device sends, to the first STA, a first indication frame carrying the first acknowledgment frame delay duration.

When the network device is the MIMO controller, the network device sends the first acknowledgment frame delay duration to the first AP, so that the first AP forwards the first acknowledgment frame delay duration to the first STA.

When the network device is the first AP, the network device sends, to the first STA, the first indication frame carrying the first acknowledgment frame delay duration.

Management frame subtypes 1101 (Action) and 1110 (Action No ACK) are used for the first indication frame carrying the first acknowledgment frame delay duration. A difference between the two subtypes lies in that, when receiving an Action frame, the first STA needs to reply to the first AP with an acknowledgment frame; but when receiving an Action No ACK frame, the first STA does not need to reply to the first AP with an acknowledgment frame. The Action frame helps provide reliable transmission, and the Action No ACK frame helps reduce network overheads.

An example in which the first indication frame is of the Action type is used below for description. The Action No ACK type has a similar principle to the Action type, and therefore is not described in this implementation.

The Action frame includes two main fields: a category (Category) field, used to indicate a specific subtype of the Action frame, and a description (Action Details) field, used to describe the Action frame.

Table 1 shows possible values of code in the category field of the Action frame.

**Table 1**

| Code | Meaning | See subclause | Robust | Group addressed privacy |
|---|---|---|---|---|
| 14 | Multihop | 8.5.18 | Yes | Yes |
| 15 | Self-protected | 8.5.16 | No | No |
| 16 | Reserved | - | - | - |
| 17 | Reserved (used by WFA) | - | - | - |
| 18-125 | Reserved | - | - | - |
| 126 | Vendor-specific Protected | 8.5.6 | Yes | No |
| 127 | Vendor-specific | 8.5.6 | No | No |
| 128-255 | Error | - | - | - |

It should be noted that, any value that is of the code in Table 1 and that is not defined in an existing protocol or that has no agreed meaning may be used in the category field of the Action frame. For example, the code in the category field of the Action frame is 16.

In a possible implementation, after obtaining the first acknowledgment frame delay duration corresponding to the first STA, when sending a data frame to the first STA, the first AP may form an aggregated frame by using the first indication frame and the data frame and then send the aggregated frame to the first STA. Overheads of a frame preamble, a frame header, and the like are reduced due to use of the aggregated frame, so that network overheads can be effectively reduced.

When the network device is the first AP, step 502 may be replaced with the following step: The first AP sends, to the first STA in a form of an aggregated frame, a first indication frame carrying the first acknowledgment frame delay duration, where the aggregated frame further includes a data frame.

Specifically, the first indication frame and the data frame are sent through aggregation by using an aggregate MAC protocol data unit (Aggregate MAC Protocol Data Unit, A-MPDU).

For example, it is assumed that after the first AP determines the first acknowledgment frame delay duration corresponding to the first STA, there are two data frames that need to be sent to the first STA. In this case, the first AP aggregates the two data frames to obtain downlink data, as shown in Table 2.

**Table 2**

| | |
|---|---|
| A-MPDU subframe 2 Data frame | A-MPDU subframe 3 Data frame |

Table 3 shows a possible location of the first indication frame in data frames in an aggregated frame obtained after the first indication frame and the data frames are aggregated. It should be noted that, the location of the first indication frame in the data frames is not limited in this implementation.

**Table 3**

| | | |
|---|---|---|
| A-MPDU subframe 1 Indication frame | A-MPDU subframe 2 Data frame | A-MPDU subframe 3 Data frame |
| | | |
| A-MPDU subframe 2 Data frame | A-MPDU subframe 1 Indication frame | A-MPDU subframe 3 Data frame |
| | | |
| A-MPDU subframe 2 Data frame | A-MPDU subframe 3 Data frame | A-MPDU subframe 1 Indication frame |
| | | |

When sending the first data frame to the first STA, the first AP sends the data frame and the first indication frame to the first STA through aggregation. Overheads of a frame preamble, a frame header, and the like can be reduced due to use of the aggregated frame, so that network overheads can be effectively reduced.

In addition, if the first AP exchanges no information with the first STA when a network MIMO mode ends, the step of sending the first indication frame may be omitted, to reduce the network overheads.

Step 503: The first STA receives the first indication frame sent by the first AP, and obtains and stores the first acknowledgment frame delay duration corresponding to the first STA that is carried in the first indication frame.

It should be noted that, when the first AP sends, to the first STA in the form of the aggregated frame, the first indication frame carrying the first acknowledgment frame delay duration, the first STA receives the aggregated frame sent by the first AP, to obtain the first indication frame and the data frame that are included in the aggregated frame, and feeds back an acknowledgment frame to the first AP after a delay of the first acknowledgment frame delay duration.

Step 504: Each time receiving a data frame sent by the first AP, the first STA feeds back an acknowledgment frame to the first AP after a delay of the first acknowledgment frame delay duration.

STAs usually correspond to different acknowledgment frame delay duration. After receiving a data frame sent by the first AP, each STA feeds back an acknowledgment frame to the first AP after a delay of corresponding acknowledgment frame delay duration. Because an interval between a time at which each STA receives the data frame and a time at which the STA determines to send the acknowledgment frame to the first AP is very short and is even 0, the first AP does not need to send a query request to each STA. Therefore, an occupation time of a large quantity of block acknowledgment requests (Block Acknowledgment Request, BAR), an SIFS between a BAR and a block acknowledgment (Block Acknowledgment, BA) message, a backoff time between acknowledgment frames, and a time for receiving, by the first AP after message retransmission is caused due to a data conflict, an acknowledgment frame with which the STA replies again can be effectively saved.

FIG 5B is a schematic diagram of acknowledgment frames received by a first AP according to an example implementation of this application. The first AP sets acknowledgment frame delay duration corresponding to a STA 1 to 16 µs, and sets acknowledgment frame delay duration corresponding to a STA 2 to 40 µs. As shown in FIG 5B, the first AP simultaneously sends data frames to the STA 1 and the STA 2, and a data stream length is 500 µs. After receiving a data frame, the STA 1 feeds back an acknowledgment frame to the first AP after a delay of 16 µs. After receiving a data frame, the STA 2 feeds back an acknowledgment frame to the first AP after a delay of 40 µs.

According to the acknowledgment frame delay duration setting method provided in this implementation of this application, the network device sends, to the first STA, the first indication frame carrying the first acknowledgment frame delay duration, so that when receiving a data frame sent by the first AP associated with the first STA, the first STA feeds back an acknowledgment frame to the first AP after a delay of the first acknowledgment frame delay duration. Because STAs in a same group usually have different acknowledgment frame delay duration, a same AP does not simultaneously receive acknowledgment frames sent by STAs in a same group. This prevents an AP from incorrectly determining, due to a conflict between an acknowledgment frame and a data frame and a conflict between acknowledgment frames, that the AP receives no acknowledgment frame sent by a STA, thereby eliminating polling overheads of the AP, and avoiding a waste of wireless communications resources.

### Implementation 2

The network device described with reference to figure 3 is not claimed as such in the present application. The method described in this implementation should be construed accordingly.

In the prior art, after receiving a data frame, a STA usually needs to feed back an acknowledgment frame to a first AP after an SIFS. Because an acknowledgment timeout time of the first AP is set for the short interframe space, after acknowledgment frame delay duration is allocated to each STA, acknowledgment timeout duration of the first AP for each STA further needs to be set based on the acknowledgment frame delay duration of each STA, to prevent the first AP from prematurely determining that data is lost and starting a re-sending procedure.

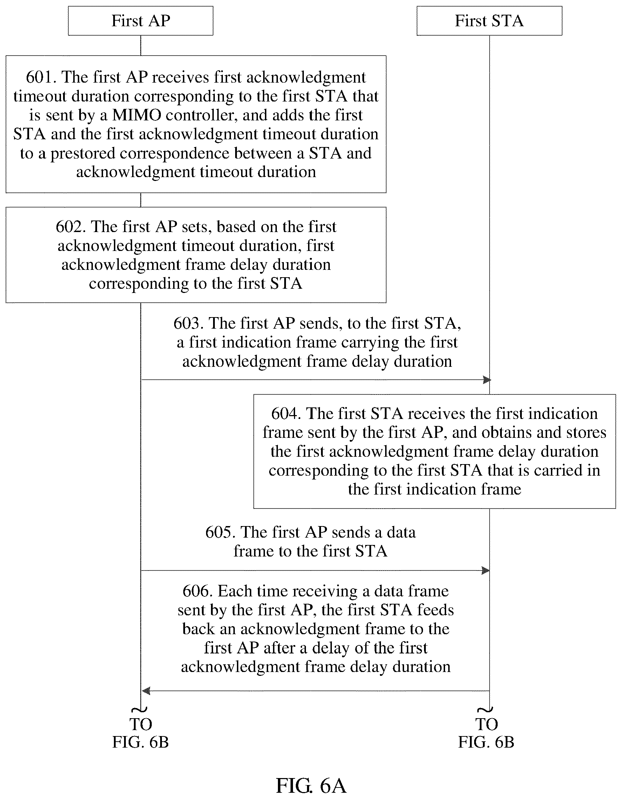

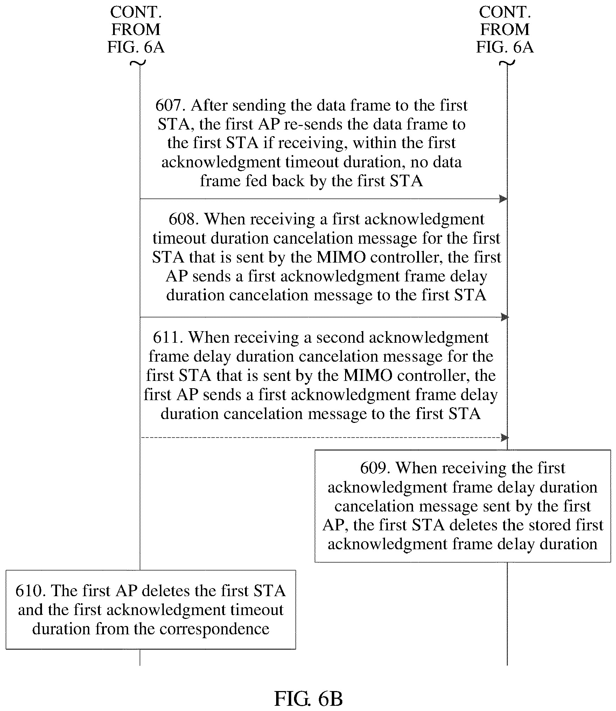

FIG 6A and FIG. 6B are a flowchart of an acknowledgment frame delay duration setting method according to another example implementation of this application. In this implementation, an example in which the method is used in the system architecture of the acknowledgment frame delay duration setting system shown in FIG. 2A is used for description. The method includes the following several steps.

Step 601: A first AP receives first acknowledgment timeout duration corresponding to a first STA that is sent by a MIMO controller, and adds the first STA and the first acknowledgment timeout duration to a prestored correspondence between a STA and acknowledgment timeout duration.

For example, the first AP receives first acknowledgment frame delay duration of 80 µs corresponding to the first STA that is sent by the MIMO controller, and sets the first acknowledgment timeout duration corresponding to the first STA to 100 µs based on the first acknowledgment frame delay duration.

It should be noted that, the MIMO controller may set different acknowledgment timeout duration for different STAs, or may set same acknowledgment timeout duration for different STAs. When same acknowledgment timeout duration is set for different STAs, the acknowledgment timeout duration is longer than acknowledgment frame delay duration corresponding to a STA having the longest acknowledgment frame delay duration.

Table 4 shows that the MIMO controller may set different acknowledgment timeout duration for different STAs connected to a same AP.

**Table 4**

| AP | STA | Acknowledgment timeout duration (µs) |
|---|---|---|
| AP 1 | STA 1 | 36 |
| AP 1 | STA 2 | 50 |

Table 5 shows that the MIMO controller may set same acknowledgment timeout duration for different STAs connected to a same AP.

**Table 5**

| AP | STA | Acknowledgment timeout duration (µs) |
|---|---|---|
| AP 1 | STA 1 | 50 |
| AP 1 | STA 2 | 50 |

Optionally, the MIMO controller sends, to the first AP in a TLV format, the first acknowledgment timeout duration corresponding to the first STA.

Optionally, to improve reliability of MIMO communication, after receiving the first acknowledgment timeout duration corresponding to the first STA that is sent by the MIMO controller, the first AP feeds back an acknowledgment setting message to the MIMO controller.

It should be noted that, to ensure the reliability of MIMO communication, the first AP may reply to the MIMO controller with a complex acknowledgment message carrying information related to the first STA. To reduce network overheads, the first AP may alternatively reply to the MIMO controller with a brief acknowledgment message carrying no original setting.

For example, the MIMO controller sends, to the first AP, the first acknowledgment timeout duration and the first acknowledgment frame delay duration that correspond to the first STA, where a MAC address of the first STA is 0x0A1122334455, the first acknowledgment frame delay duration is 50 µs, and the first acknowledgment timeout duration is 100 µs.

The MIMO controller sends, to the first AP, a setting message that carries the first acknowledgment timeout duration and indicates that the first AP does not need to feed back the acknowledgment setting message. Table 6 shows a possible message format of the setting message (a time unit is µs).

**Table 6**

| Type | Len | Value |
|---|---|---|
| 00 (message type) | 1 | 0 (indicating a setting request) |
| 01 (message identifier) | 2 | Message ID |
| 02 (MAC address of the first STA) | 6 | 0x0A1122334455 |
| 03 (acknowledgment frame delay duration) | 2 | 50 |
| 04 (acknowledgment timeout duration) | 2 | 100 |
| 05 (whether an acknowledgment message needs to be replied with) | 1 | 0 (no acknowledgment is required) |
| ... | ... | ... |

The MIMO controller sends, to the first AP, a setting message that carries the first acknowledgment timeout duration and indicates that the first AP needs to feed back the complex acknowledgment message. Table 7 shows a possible message format of the setting message (a time unit is µs).

**Table 7**

| Type | Len | Value |
|---|---|---|
| 00 (message type) | 1 | 1 (indicating a setting reply) |
| 01 (message identifier) | 2 | Message ID |
| 02 (MAC address of the first STA) | 6 | 0x0A1122334455 |
| 03 (first acknowledgment frame delay duration) | 2 | 50 |
| 04 (first acknowledgment timeout duration) | 2 | 100 |
| 05 (whether an acknowledgment message needs to be replied with) | 1 | 1 (complex acknowledgment) |
| ... | ... | ... |

The MIMO controller sends, to the first AP, a setting message that carries the first acknowledgment timeout duration and indicates that the first AP needs to feed back the brief acknowledgment message. Table 8 shows a possible message format of the setting message (a time unit is µs).

**Table 8**

| Type | Len | Value |
|---|---|---|
| 00 (message type) | 1 | 1 (indicating a setting reply) |
| 01 (message identifier) | 2 | Message ID |
| 02 (MAC address of the first STA) | 6 | 0x0A1122334455 |
| 03 (first acknowledgment frame delay duration) | 2 | 50 |
| 04 (first acknowledgment timeout duration) | 2 | 100 |
| 05 (whether an acknowledgment message needs to be replied with) | 1 | 2 (brief acknowledgment) |
| ... | ... | ... |

It should be noted that, a meaning of each value in Type, Len, and Value in Table 6 to Table 8 is merely a possible representation, and the meaning of each value in Type, Len, and Value is not limited in this implementation.

Correspondingly, when the first AP receives the setting message that is sent by the MIMO controller and that indicates that the first AP needs to feed back the complex acknowledgment message, a possible message format of the complex acknowledgment message fed back by the first AP is shown in Table 9 (a time unit is µs).

**Table 9**

| Type | Len | Value |
|---|---|---|
| 00 (message type) | 1 | 1 (indicating a complex acknowledgment reply) |
| 01 (message identifier) | 2 | Message ID |
| 02 (MAC address of the first STA) | 6 | 0x0A1122334455 |
| 03 (first acknowledgment frame delay duration) | 2 | 50 |
| 04 (first acknowledgment timeout duration) | 2 | 100 |
| 05 | 1 | 0 |
| ... | ... | ... |

Correspondingly, when the first AP receives the setting message that is sent by the MIMO controller and that indicates that the first AP needs to feed back the brief acknowledgment message, a possible message format of the brief acknowledgment message fed back by the first AP is shown in Table 10 (a time unit is µs).

**Table 10**

| Type | Len | Value |
|---|---|---|
| 00 (message type) | 1 | 2 (indicating a brief |
| | | acknowledgment reply) |
| 01 (message identifier) | 2 | Message ID |
| 05 | 1 | 0 |
| ... | ... | ... |

Optionally, the first AP feeds back the acknowledgment setting message to the MIMO controller in a TLV format.

In a possible implementation, the acknowledgment timeout duration of each STA may also be set by a first AP associated with each STA in addition to the MIMO controller. To be specific, the first AP receives the first acknowledgment frame delay duration corresponding to the first STA that is sent by the MIMO controller, sets, based on the first acknowledgment frame delay duration, the first acknowledgment timeout duration corresponding to the first STA, and adds the first STA and the first acknowledgment timeout duration to the prestored correspondence between a STA and acknowledgment timeout duration.

It should be noted that, the first acknowledgment timeout duration is longer than the first acknowledgment frame delay duration.

Step 602: The first AP sets, based on the first acknowledgment timeout duration, the first acknowledgment frame delay duration corresponding to the first STA.

For example, the first AP receives the first acknowledgment timeout duration of 100 µs corresponding to the first STA that is sent by the MIMO controller, and sets the first acknowledgment frame delay duration corresponding to the first STA to 80 µs based on the first acknowledgment timeout duration.

In a possible implementation, the first acknowledgment frame delay duration corresponding to the first STA may also be set by the MIMO controller in addition to the first AP. To be specific, the first AP receives the first acknowledgment frame delay duration corresponding to the first STA that is sent by the MIMO controller, and sends the first acknowledgment frame delay duration to the first STA.

Step 603: The first AP sends, to the first STA, a first indication frame carrying the first acknowledgment frame delay duration.

Step 604: The first STA receives the first indication frame sent by the first AP, and obtains and stores the first acknowledgment frame delay duration corresponding to the first STA that is carried in the first indication frame.

Step 605: The first AP sends a data frame to the first STA.

Optionally, the first AP and the first STA each are provided with two interfaces: a first interface and a second interface. Power consumption on the first interface is greater than power consumption on the second interface.

The first AP sends the first indication frame and the data frame to the STA through a first interface, and listens to and receives, through a second interface, an acknowledgment frame fed back by each STA, to reduce power consumption of the first AP.

Likewise, the first STA feeds back an acknowledgment frame to the first AP through a first interface, and listens to and receives, through a second interface, an indication frame and a data frame that are sent by each first AP. Power consumption on the first interface is greater than power consumption on the second interface, to reduce power consumption of the first STA.

In a possible implementation scenario, when the first AP enters a sleep state, the first AP performs listening through the second interface. When obtaining, through listening, a PS-Poll frame sent by the first STA, the first AP feeds back an acknowledgment frame to the first STA through the second interface.

It should be noted that, when obtaining, through listening, the PS-Poll frame sent by the first STA, the first AP may immediately feed back the acknowledgment frame to the first STA, or may not feed back the acknowledgment frame to the first STA until an environment permits, or may feed back the acknowledgment frame to the first STA when the first AP is in an idle state. An occasion on which the first AP feeds back the acknowledgment frame to the first STA is not limited in this implementation.

In another possible implementation scenario, when the first STA enters a sleep state, the first STA performs listening through the second interface. When obtaining, through listening, a wake-up frame sent by the first AP, the first STA feeds back an acknowledgment frame to the first AP through the second interface after a delay of the first acknowledgment frame delay duration.

If a plurality of STAs associated with a same AP have a same operating band, and the plurality of STAs have same acknowledgment frame delay duration, the first AP may not simultaneously send data frames or indication frames to the plurality of STAs, to prevent the plurality of STAs from simultaneously feeding back acknowledgment frames to the first AP.

Optionally, after step 602, the first AP adds the first STA and the first acknowledgment frame delay duration to a prestored correspondence between a STA and acknowledgment frame delay duration. In addition, before step 603, the first AP needs to perform the following steps:
S1: Determine whether the first AP needs to simultaneously send data to other STAs.
S2: If the first AP needs to simultaneously send data to other STAs, determine, based on the prestored correspondence between a STA and acknowledgment frame delay duration, whether STAs corresponding to same acknowledgment frame delay duration as the first STA exist in the STAs to which the first AP needs to simultaneously send data frames.
S3: If the STAs to which the first AP needs to simultaneously send the data frames correspond to different acknowledgment frame delay duration, perform the step of sending a data frame to the first STA.
S4: If STAs corresponding to same acknowledgment frame delay duration as the first STA exist in the STAs to which the first AP needs to simultaneously send the data frames, sequentially send data frames to the STAs having the same acknowledgment frame delay duration as the first STA; or if STAs corresponding to same acknowledgment frame delay duration as the first STA exist in the STAs to which the first AP needs to simultaneously send the data frames, first set the acknowledgment frame delay duration of the STAs having the same acknowledgment frame delay duration as the first STA to different acknowledgment frame delay duration, and then send data frames to the STAs whose acknowledgment frame delay duration is reset.

When receiving, again, a first indication frame carrying acknowledgment frame delay duration, the first STA replaces locally stored acknowledgment frame delay duration with the acknowledgment frame delay duration in the first indication frame.

For example, the first STA stores acknowledgment frame delay duration of 90 µs; when receiving a first indication frame that carries acknowledgment frame delay duration of 120 µs and that is sent by the first AP, the first STA obtains the acknowledgment frame delay duration of 120 µs carried in the first indication frame and replaces 90 µs with 120 µs for storage.

It should be noted that, in step S4, the acknowledgment frame delay duration of the STAs may be reset by the MIMO controller, or the acknowledgment frame delay duration of the STAs may be reset by the AP.

It should be noted that, a specific value of a time interval for sequentially sending data frames is not limited in this implementation.

Step 606: Each time receiving a data frame sent by the first AP, the first STA feeds back an acknowledgment frame to the first AP after a delay of the first acknowledgment frame delay duration.

Step 607: After sending the data frame to the first STA, the first AP re-sends the data frame to the first STA if receiving, within the first acknowledgment timeout duration, no data frame fed back by the first STA.

If receiving, within the first acknowledgment timeout duration corresponding to the first STA, no data frame fed back by the first STA, the first AP determines that the data frame sent to the STA is lost. In this case, the first AP re-sends the data frame to the first STA.

In the solution provided in this implementation of this application, a network device sends, to the first STA, the first indication frame carrying the first acknowledgment frame delay duration, so that when receiving a data frame sent by the first AP associated with the first STA, the first STA feeds back an acknowledgment frame to the first AP after a delay of the first acknowledgment frame delay duration. Because STAs in a same group usually have different acknowledgment frame delay duration, a same AP does not simultaneously receive acknowledgment frames sent by STAs in a same group. This prevents an AP from incorrectly determining, due to a conflict between an acknowledgment frame and a data frame and a conflict between acknowledgment frames, that the AP receives no acknowledgment frame sent by a STA, thereby eliminating polling overheads of the AP, and avoiding a waste of wireless communications resources.

In this implementation, after the acknowledgment frame delay duration is allocated to each STA, the acknowledgment timeout duration of the first AP for each STA further needs to be set based on the acknowledgment frame delay duration of each STA, to prevent the first AP from prematurely determining that data is lost and starting a re-sending procedure.

In a possible implementation, still referring to FIG 6A and FIG 6B, the MIMO controller may actively send a first acknowledgment timeout duration cancelation message to the first AP according to a requirement (for example, after a network MIMO phase ends), to control the first AP to cancel acknowledgment timeout duration for some or all of STAs connected to the first AP.

Step 608: When receiving a first acknowledgment timeout duration cancelation message for the first STA that is sent by the MIMO controller, the first AP sends a first acknowledgment frame delay duration cancelation message to the first STA.

An acknowledgment timeout time for a STA is set by the MIMO controller based on acknowledgment frame delay duration of the STA. To prevent the first AP from prematurely determining that data is lost and starting a re-sending procedure after the MIMO controller cancels the acknowledgment timeout time for the STA, the first AP further needs to cancel the acknowledgment frame delay duration of the first STA after canceling an acknowledgment timeout time corresponding to the first STA, so that the first STA and the first AP both restore to a default mechanism.

There are at least two following possible message formats of the first acknowledgment timeout duration cancelation message:
A first possible message format is shown in Table 11, and a new encoding manner is used for the message format of the first acknowledgment timeout duration cancelation message.

**Table 11**

| Type | Len | Value |
|---|---|---|
| 00 (message type) | 1 | 2 (indicating a setting request) |
| 01 (message identifier) | 2 | Message ID |
| 02 (MAC address of the first STA) | 6 | 0x0A1122334455 |
| 04 (whether an acknowledgment message needs to be replied with) | 1 | 0 (no acknowledgment is required)11 (complex acknowledgment)/2 (brief acknowledgment) |
| ... | ... | ... |

Optionally, after deleting the first STA and the first acknowledgment timeout duration from the correspondence, the first AP feeds back an acknowledgment cancelation message to the MIMO controller.

It should be noted that, to ensure reliability of MIMO communication, the first AP may reply to the MIMO controller with a complex acknowledgment message carrying information related to the first STA. To reduce network overheads, the first AP may alternatively reply to the MIMO controller with a brief acknowledgment message carrying no original setting.

Correspondingly, a possible message format of the complex acknowledgment message is shown in Table 12 (a time unit is µs).

**Table 12**

| Type | Len | Value |
|---|---|---|
| 00 (message type) | 1 | 1 (indicating a complex acknowledgment reply) |
| 01 (message identifier) | 2 | Message ID |
| 02 (MAC address of the STA) | 6 | 0x0A1122334455 |
| 04 (whether an acknowledgment message needs to be replied with) | 1 | 0 (no acknowledgment is required) |
| ... | ... | ... |

Correspondingly, a possible message format of the brief acknowledgment message is shown in Table 13 (a time unit is µs).

**Table 13**

| Type | Len | Value |
|---|---|---|
| 00 (message type) | 1 | 2 (indicating a brief acknowledgment reply) |
| 01 (message identifier) | 2 | Message ID |
| 04 (whether an | 1 | 0 (no acknowledgment is |
| acknowledgment message needs to be replied with) | | required) |
| ... | ... | ... |

A second possible message format is shown in Table 14. A message format of a setting message is used for the message format of the first acknowledgment timeout duration cancelation message, but the first acknowledgment timeout duration is set to 0µs.

When receiving the first acknowledgment timeout duration cancelation message for the first STA that is sent by the MIMO controller, the first AP obtains the first acknowledgment timeout duration (0 µs) carried in the first acknowledgment timeout duration cancelation message, and deletes the first STA and the first acknowledgment timeout duration from the correspondence.

**Table 14**

| Type | Len | Value |
|---|---|---|
| 00 (message type) | 1 | 0 (indicating a setting request) |
| 01 (message identifier) | 2 | Message ID |
| 02 (MAC address of the first STA) | 6 | 0x0A1122334455 |
| 03 (first acknowledgment timeout duration) | 2 | 0 |
| 04 (whether an acknowledgment message needs to be replied with) | 1 | 0 (no acknowledgment is required)/1 (complex acknowledgment)/2 (brief acknowledgment) |
| ... | ... | ... |

Optionally, after deleting the first STA and the first acknowledgment timeout duration from the correspondence, the first AP feeds back an acknowledgment cancelation message to the MIMO controller.

A possible message format of a complex acknowledgment message is shown in Table 15 (a time unit is µs).

**Table 15**

| Type | Len | Value |
|---|---|---|
| 00 (message type) | 1 | 1 (indicating a setting reply) |
| 01 (message identifier) | 2 | Message ID |
| 02 (MAC address of the first STA) | 6 | 0x0A1122334455 |
| 03 (first acknowledgment timeout duration) | 2 | 0 |
| ... | ... | ... |

A possible message format of a brief acknowledgment message is shown in Table 16 (a time unit is µs).

**Table 16**

| Type | Len | Value |
|---|---|---|
| 00 (message type) | 1 | 2 (indicating a brief setting reply) |
| 01 (message identifier) | 2 | Message ID |
| ... | ... | ... |

Optionally, the MIMO controller sends the first acknowledgment timeout duration cancelation message to the first AP in a TLV format, and the first AP feeds back the acknowledgment cancelation message to the MIMO controller in a TLV format.

Optionally, a message type of the first acknowledgment frame delay duration cancelation message is a first indication frame carrying acknowledgment frame delay duration of 0µs.

Optionally, a message type of the first acknowledgment frame delay duration cancelation message is an Action frame. For example, an Action frame with a category field being 16 and a description field being 3 is defined as a first indication frame for canceling the acknowledgment frame delay duration. When receiving the first acknowledgment timeout duration cancelation message for the first STA that is sent by the MIMO controller, the first AP sends, to the first STA, the Action frame with the category field being 16 and the description field being 3.

Step 609: When receiving the first acknowledgment frame delay duration cancelation message sent by the first AP, the first STA deletes the stored first acknowledgment frame delay duration.

After the first STA deletes the stored first acknowledgment frame delay duration, the first STA restores to a default mechanism, to be specific, each time receiving a data frame sent by the first AP, the first STA feeds back an acknowledgment frame to the first AP after an SIFS.

Optionally, after deleting the stored first acknowledgment frame delay duration, the first STA feeds back an acknowledgment cancelation message to the first AP.

It should be noted that, the STA may feed back the acknowledgment cancelation message to the first AP at a media access control (Media Access Control, MAC) layer by using an ACK frame, or may feed back the acknowledgment cancelation message to the first AP at a protocol interaction layer by using an Action frame.

Step 610: The first AP deletes the first STA and the first acknowledgment timeout duration from the correspondence.

It should be noted that, an execution location of step 608 to step 610 shown in FIG 6B is merely a possible implementation. During actual application, step 608 to step 610 may be implemented at any location after step 601. An execution location of step 608 to step 610 in step 601 to step 607 is not limited in this implementation.

In another possible implementation, still referring to FIG 6A and FIG 6B, the MIMO controller may actively send, by using the first AP, the first acknowledgment frame delay duration cancelation message to the first STA according to a requirement (for example, after the network MIMO phase ends), to control the STA to cancel the acknowledgment frame delay duration. When the MIMO controller may actively send, by using the first AP, the first acknowledgment frame delay duration cancelation message to the first STA according to a requirement, the method includes the following step:
Step 611: When receiving a second acknowledgment frame delay duration cancelation message for the first STA that is sent by the MIMO controller, the first AP sends a first acknowledgment frame delay duration cancelation message to the first STA.

Correspondingly, when receiving the first acknowledgment frame delay duration cancelation message sent by the first AP, the first STA deletes the stored first acknowledgment frame delay duration.

Optionally, the first AP sends, to the first STA in a form of an aggregated frame, a first indication frame for canceling the acknowledgment frame delay duration, where the aggregated frame further includes a data frame.

Optionally, to prevent a network delay of the first STA from being increased due to the first acknowledgment timeout duration corresponding to the first STA, after the first AP sends the first acknowledgment frame delay duration cancelation message to the first STA, the first AP deletes the first STA and the first acknowledgment timeout duration from the correspondence.

It should be noted that, step 611 is implemented before step 609.

### Implementation 3

The network device described with reference to figure 3 is not claimed as such in the present application. The method described in this implementation should be construed accordingly.

A MIMO controller may separately set a use count of an acknowledgment frame delay duration, to control a quantity of times a STA uses the acknowledgment frame delay duration after receiving a data frame.

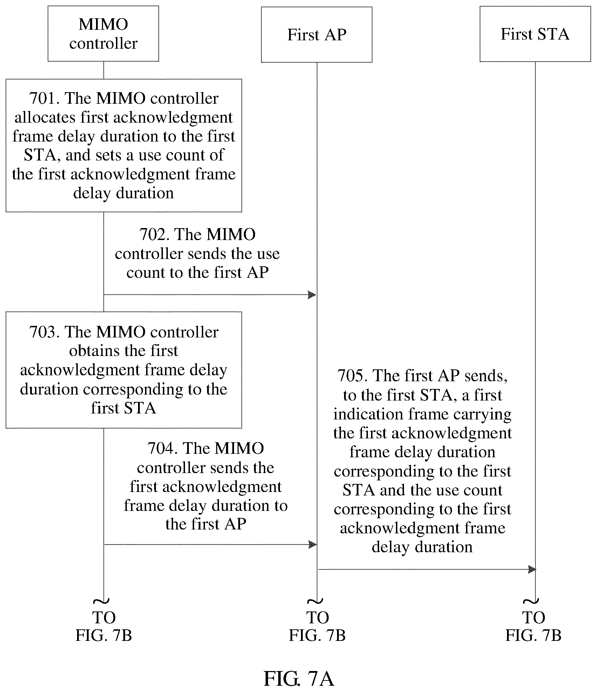

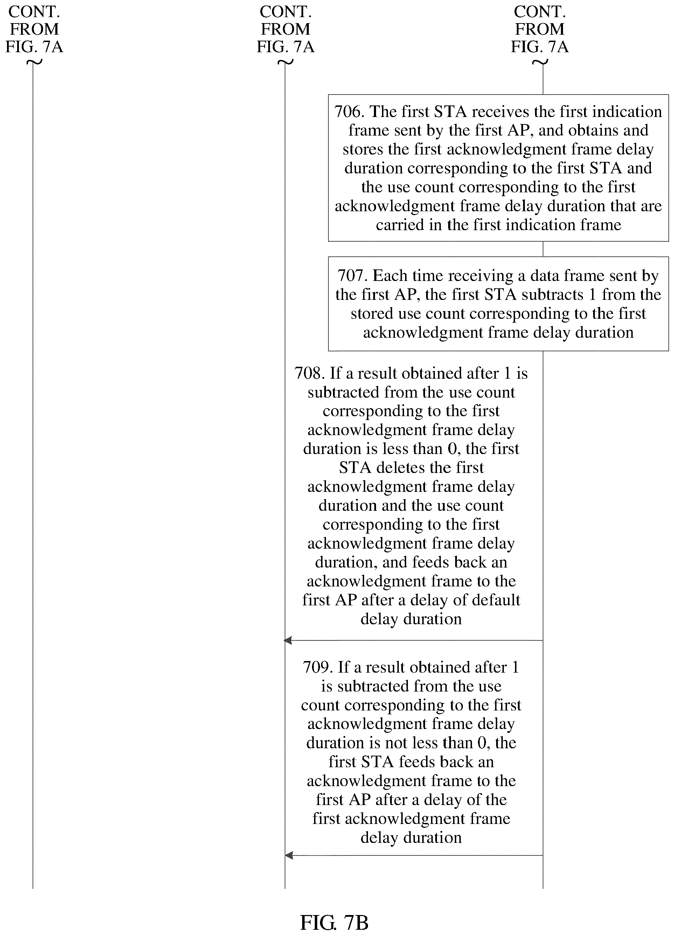

FIG 7A and FIG 7B are a flowchart of an acknowledgment frame delay duration setting method according to still another example implementation of this application. In this implementation, an example in which the method is used in the system architecture of the acknowledgment frame delay duration setting system shown in FIG 1 is used for description. The method includes the following several steps.

Step 701: A MIMO controller allocates first acknowledgment frame delay duration to a first STA, and sets a use count of the first acknowledgment frame delay duration.

Step 702: The MIMO controller sends the use count to a first AP.

The first AP is an AP associated with the first STA.

Step 703: The MIMO controller obtains the first acknowledgment frame delay duration corresponding to the first STA.

Step 704: The MIMO controller sends the first acknowledgment frame delay duration to the first AP.

It should be noted that, the MIMO controller may separately send the first acknowledgment frame delay duration and the use count of the first acknowledgment frame delay duration to the first AP, or may combine the first acknowledgment frame delay duration and the use count of the first acknowledgment frame delay duration into one message and then send the message to the first AP.

Step 705: The first AP sends, to the first STA, a first indication frame carrying the first acknowledgment frame delay duration corresponding to the first STA and the use count corresponding to the first acknowledgment frame delay duration.

Optionally, the first indication frame may be used to indicate a single delay or may be used to indicate a plurality of delays. When the first indication frame indicates a single delay, the first acknowledgment frame delay duration carried in the first indication frame can be used only once; or when the first indication frame indicates a plurality of delays, the first indication frame carries the use count corresponding to the first acknowledgment frame delay duration.

It should be noted that, the first indication frame further has a function of canceling the acknowledgment frame delay duration, and different functions are distinguished based on an ACK delay time field (type) in an Action Details field of the first indication frame.

Table 17 shows a possible meaning of the ACK delay time field in the description field of the first indication frame, and the meaning of the ACK delay time field is a meaning of the first indication frame. It should be noted that, a correspondence between an ACK delay time field and a meaning in Table 17 constitutes no limitation on the meaning corresponding to the ACK delay time field.

**Table 17**

| ACK delay time field | Meaning |
|---|---|
| 0 | A delay value is valid for a single time |
| 1 | A delay value is valid for a plurality of times |
| 2 | Cancel a delay value |
| 3 to 255 | Reserved |

Table 18 shows a possible frame format of the first indication frame when the first indication frame is used to indicate a single delay.

**Table 18**

| ACK delay time field | Delay time most significant bit | Delay time least significant bit |
|---|---|---|
| 0 (single delay) | 8 time most significant bits | 8 time least significant bits |

Table 19 shows a possible frame format of the first indication frame when the first indication frame is used to indicate a plurality of delays.

**Table 19**

| ACK delay time field | Delay time most significant bit | Delay time least significant bit | Delay count most significant bit | Delay count least significant bit |
|---|---|---|---|---|
| 1 (a plurality of delays) | 8 time most significant bits | 8 time least significant bits | 8 time most significant bits | 8 time least significant bits |

It should be noted that, the use count is set by the MIMO controller when the MIMO controller allocates the corresponding first acknowledgment frame delay duration to the first STA.

Step 706: The first STA receives the first indication frame sent by the first AP, and obtains and stores the first acknowledgment frame delay duration corresponding to the first STA and the use count corresponding to the first acknowledgment frame delay duration that are carried in the first indication frame.

Step 707: Each time receiving a data frame sent by the first AP, the first STA subtracts 1 from the stored use count corresponding to the first acknowledgment frame delay duration.

Step 708: If a result obtained after 1 is subtracted from the use count corresponding to the first acknowledgment frame delay duration is less than 0, the first STA deletes the first acknowledgment frame delay duration and the use count corresponding to the first acknowledgment frame delay duration, and feeds back an acknowledgment frame to the first AP after a delay of default delay duration.

If the result obtained after 1 is subtracted from the use count corresponding to the first acknowledgment frame delay duration is less than 0, it indicates that the use count has been exhausted before 1 is subtracted from the use count. In this case, the first STA deletes the first acknowledgment frame delay duration and the use count corresponding to the first acknowledgment frame delay duration, and executes a default mechanism, to be specific, feeds back the acknowledgment frame to the first AP after a delay of the default delay duration.

It should be noted that, in this implementation, when the first STA receives a first acknowledgment frame delay duration cancelation message sent by the first AP, even if the use count corresponding to the first acknowledgment frame delay duration is greater than 0, the first STA still deletes the stored first acknowledgment frame delay duration, and executes the default mechanism.

Step 709: If a result obtained after 1 is subtracted from the use count corresponding to the first acknowledgment frame delay duration is not less than 0, the first STA feeds back an acknowledgment frame to the first AP after a delay of the first acknowledgment frame delay duration.

If the result obtained after 1 is subtracted from the use count corresponding to the first acknowledgment frame delay duration is not less than 0, it indicates that the use count has not been exhausted before 1 is subtracted from the use count. In this case, the first STA feeds back the acknowledgment frame to the first AP after a delay of the first acknowledgment frame delay duration.

It should be noted that, in this implementation, a subtractive operation is performed on the use count before whether the use count is exhausted is determined. During actual application, whether the use count is exhausted may be determined before a subtractive operation is performed on the use count. In this case, step 707 to step 709 may be replaced with the following step Q1 to step Q3:
Step Q1: Each time receiving a data frame sent by the first AP, the first STA determines whether the stored use count corresponding to the first acknowledgment frame delay duration is 0.
Step Q2: If the stored use count corresponding to the first acknowledgment frame delay duration is 0, the first STA deletes the first acknowledgment frame delay duration and the use count corresponding to the first acknowledgment frame delay duration, and feeds back an acknowledgment frame to the first AP after a delay of default delay duration.
Step Q3: If the stored use count corresponding to the first acknowledgment frame delay duration is not 0, the first STA subtracts 1 from the stored use count corresponding to the first acknowledgment frame delay duration, and feeds back an acknowledgment frame to the first AP after a delay of the first acknowledgment frame delay duration.

In the solution provided in this implementation of this application, a network device sends, to the first STA, the first indication frame carrying the first acknowledgment frame delay duration, so that when receiving a data frame sent by the first AP associated with the first STA, the first STA feeds back an acknowledgment frame to the first AP after a delay of the first acknowledgment frame delay duration. Because STAs in a same group usually have different acknowledgment frame delay duration, a same AP does not simultaneously receive acknowledgment frames sent by STAs in a same group. This prevents an AP from incorrectly determining, due to a conflict between an acknowledgment frame and a data frame and a conflict between acknowledgment frames, that the AP receives no acknowledgment frame sent by a STA, thereby eliminating polling overheads of the AP, and avoiding a waste of wireless communications resources.

In this implementation, the MIMO controller may separately set the use count of the acknowledgment frame delay duration, to control the quantity of times the STA uses the acknowledgment frame delay duration after receiving the data frame.

### Implementation 4

The network device described with reference to figure 3 is not claimed as such in the present application. The method described in this implementation should be construed accordingly.

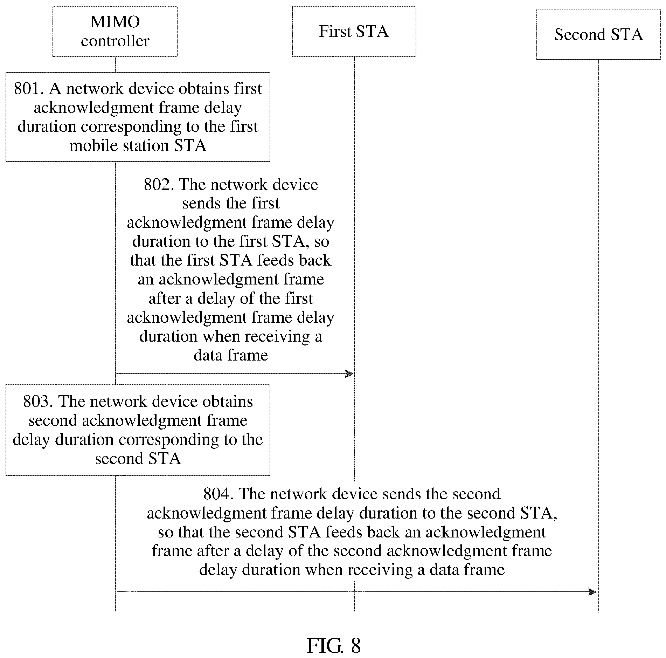

When a plurality of STAs are STAs in a same group, a conflict is likely to be caused between acknowledgment frames simultaneously fed back by the plurality of STAs to an AP. To prevent STAs in a same group from simultaneously feeding back acknowledgment frames to an AP, the plurality of STAs correspond to different acknowledgment frame delay duration. FIG 8 is a flowchart of an acknowledgment frame delay duration setting method according to yet another example implementation of this application.

Step 801: A network device obtains first acknowledgment frame delay duration corresponding to a first mobile station STA.

Step 802: The network device sends the first acknowledgment frame delay duration to the first STA, so that the first STA feeds back an acknowledgment frame after a delay of the first acknowledgment frame delay duration when receiving a data frame.

Step 803: The network device obtains second acknowledgment frame delay duration corresponding to a second STA.

Step 804: The network device sends the second acknowledgment frame delay duration to the second STA, so that the second STA feeds back an acknowledgment frame after a delay of the second acknowledgment frame delay duration when receiving a data frame.

It should be noted that, the first STA and the second STA are STAs in a same group, and the two STAs meet at least one of the following cases:
In a first case, the first STA and the second STA are associated with a same AP, and the AP is to simultaneously send data frames to the first STA and the second STA.
In a second case, a first AP associated with the first STA and a second AP associated with second STA have a same operating band, and the second AP also sends a data frame to the second STA when the first AP sends a data frame to the first STA.

When the first STA and the second STA are STAs in a same group, the network device may set different acknowledgment frame delay duration for the first STA and the second STA (in other words, the first acknowledgment frame delay duration is different from the second acknowledgment frame delay duration), or set same acknowledgment frame delay duration for the first STA and the second STA (in other words, the first acknowledgment frame delay duration is the same as the second acknowledgment frame delay duration), but does not simultaneously send data frames to the first STA and the second STA.

In the solution provided in this implementation of this application, the first AP sends, to the first STA, a first indication frame carrying the first acknowledgment frame delay duration, so that when receiving a data frame sent by the first AP, the first STA feeds back an acknowledgment frame to the first AP after a delay of the first acknowledgment frame delay duration. Because STAs in a same group have different acknowledgment frame delay duration, a same AP does not simultaneously receive acknowledgment frames sent by STAs in a same group. This prevents the first AP from incorrectly determining, due to a conflict between an acknowledgment frame and a data frame and a conflict between acknowledgment frames, that the first AP receives no acknowledgment frame sent by a STA, thereby reducing polling overheads of the first AP, and avoiding a waste of network resources.

In this implementation, to prevent STAs in a same group from simultaneously feeding back acknowledgment frames to an AP, the plurality of STAs correspond to different acknowledgment frame delay duration.

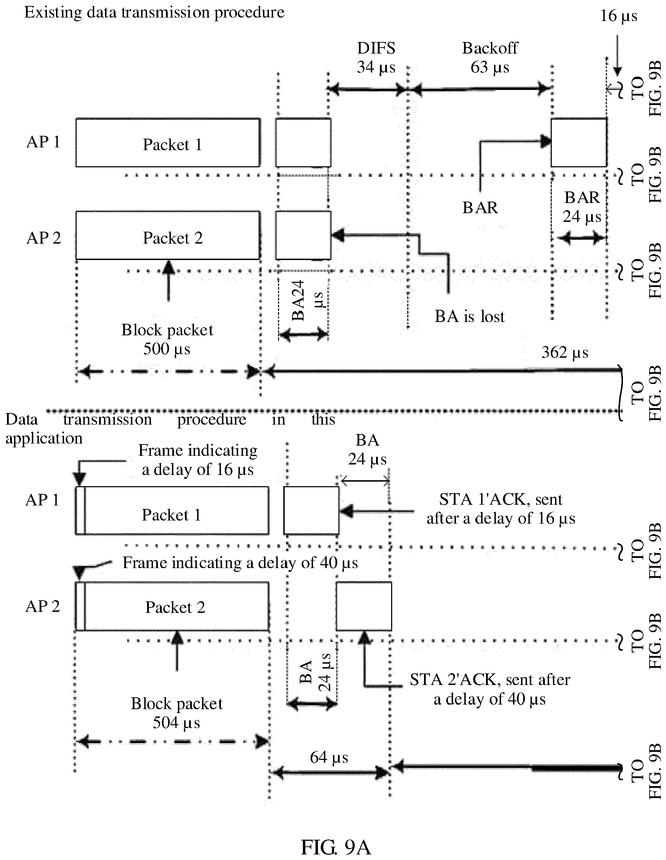

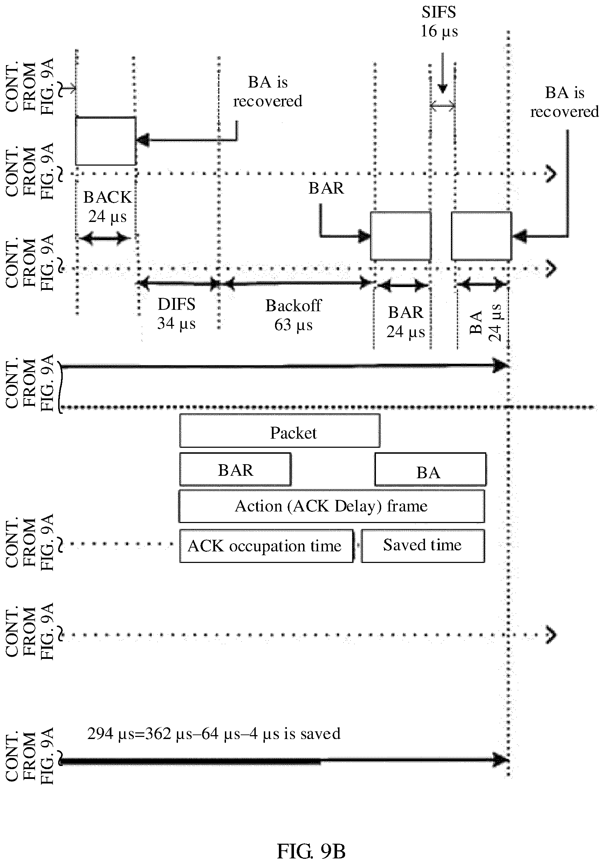

FIG 9A and FIG 9B are a schematic diagram of comparison between an existing data transmission procedure and a data transmission procedure in this application according to an example implementation of this application. As shown in FIG 9, two APs, two STAs, and a data stream length of 500 µs are used as an example.

In the existing data transmission procedure, after an AP 1 and an AP 2 respectively send data to a STA 1 and a STA 2 at a network MIMO phase (500 µs), the STA 1 and the STA 2 feed back acknowledgment frames (24 µs). In this case, an ACK conflict is caused between the acknowledgment frames fed back by the STA 1 and the STA 2. Because neither the AP 1 nor the AP 2 receives an acknowledgment frame sent by a corresponding STA, the AP 1 and the AP 2 start to contend for an air interface medium (34 µs+63 µs). It is assumed that the AP 1 sends a BAR (24 µs) after obtaining a medium access right, the STA 1 sends a BA (24 µs) after an SIFS after the BAR is sent, and after receiving the BA sent by the STA 1, the AP 1 determines that the STA 1 receives data that is sent by the AP 1 at the network MIMO phase. The AP 2 sends a BAR to the STA 2 (24 µs) after backoff (34 µs+63 µs), the STA 2 sends a BA (24 µs) after an SIFS after the BAR is sent, and after receiving the BA sent by the STA 2, the AP 2 determines that the STA 2 receives data that is sent by the AP 1 at the network MIMO phase.

It can be learned that, once an ACK conflict is caused in the existing data transmission procedure, duration required for determining, by exchanging the BARs and the BAs, whether the STA 1 and the STA 2 receive the data is 362 µs.

In the data transmission procedure in this application, an AP 1 and an AP 2 respectively send data and corresponding first indication frames carrying acknowledgment frame delay duration to a STA 1 and a STA 2 (504 µs). Acknowledgment frame delay duration corresponding to the STA 1 is 16 µs, and acknowledgment frame delay duration corresponding to the STA 2 is 40 µs. After receiving data and a first indication frame that are sent by the AP 1, the STA 1 feeds back an acknowledgment frame to the AP (24 µs) after a delay of 16 µs. After receiving data and a first indication frame that are sent by the AP2, the STA 2 feeds back an acknowledgment frame to the AP (24 µs) after a delay of 40 µs. Both the AP 1 and the AP 2 receive the acknowledgment frames sent by the corresponding STAs.

It can be learned that, in the data transmission procedure in this application, an ACK conflict can be effectively avoided, and duration required for determining whether the STA 1 and the STA 2 receive the data is 64 µs.

Compared with the existing data transmission procedure, in the data transmission procedure in this application, 4 µs is added at a data sending phase, and 298 (362-64) µs is saved at a phase of determining whether the STA 1 and the STA 2 receive the data, and therefore a total of 294 µs is saved in the entire procedure.

The solutions provided in the implementations of this application are mainly described above from a perspective of interaction between the network device and the STA. It may be understood that, to implement the foregoing functions, the network device and the STA include corresponding hardware structures and/or software modules for performing the functions. The example units and algorithm steps described with reference to the implementations disclosed in this application can be implemented in a form of hardware or a combination of hardware and computer software in the implementations of this application. Whether a function is performed by hardware or hardware driven by computer software depends on particular applications and design constraint conditions of the technical solutions. A person skilled in the art may use different methods to implement the described functions for each particular application, but it should not be considered that the implementation falls beyond the scope of the technical solutions in the implementations of this application.

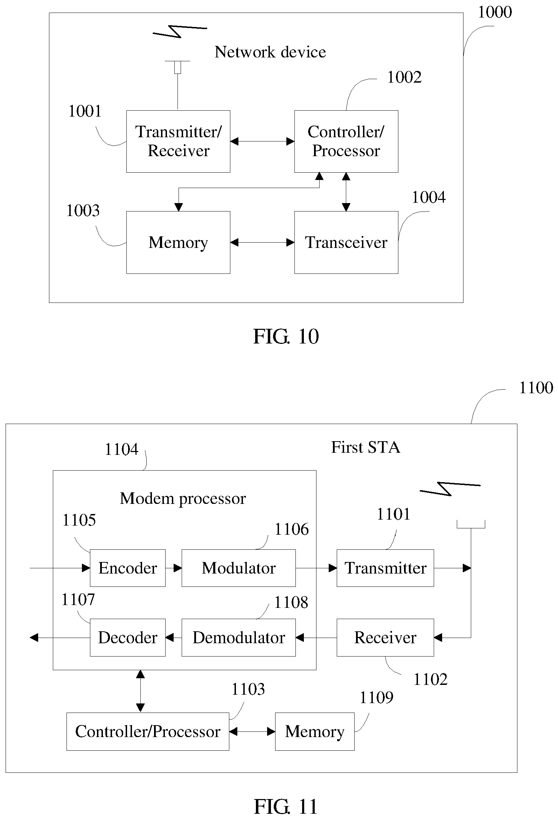

FIG 10 is a possible schematic structural diagram of a network device 1000 according to an implementation of this application. The network device is not claimed as such in the present application.

The network device 1000 includes a transmitter/receiver 1001 and a processor 1002. The processor 1002 may also be a controller, and is represented as a "controller/processor 1002" in FIG 10. The transmitter/receiver 1001 is configured to: support the network device in sending information to and receiving information from the STA in the foregoing implementations, and support the STA in performing radio communication with another STA. The processor 1002 performs various functions for communication with the STA. On an uplink, an uplink signal from the STA is received through an antenna, demodulated by the receiver 1001 (for example, a high frequency signal is demodulated into a baseband signal), and is further processed by the processor 1002 to recover service data and signaling information that are sent by the STA. On a downlink, service data and a signaling message are processed by the processor 1002, and modulated by the transmitter 1001 (for example, a baseband signal is modulated into a high frequency signal) to generate a downlink signal, and the downlink signal is transmitted to the STA through the antenna. It should be noted that, the demodulation or modulation function may be alternatively completed by the processor 1002. For example, the processor 1002 is further configured to perform the process in step 1002 in FIG 10 and/or another process in the technical solutions described in this application.

Further, the network device 1000 may further include a memory 1003. The memory 1003 is configured to store program code and data of the network device 1000. In addition, the network device may further include a transceiver 1004. The transceiver 1004 is configured to support the network device in communicating with another network entity (for example, a network device in a core network). For example, in an LTE system, the transceiver 1004 may be an S1-U interface, configured to support the network device in communicating with a serving gateway (Serving Gateway, SGW for short), or the transceiver 1004 may be an S1-MME interface, configured to support the network device in communicating with a mobility management entity (Mobility Management Entity, MME for short).

It may be understood that, FIG 10 merely shows a simplified design of the network device 1000. During actual application, the network device 1000 may include any quantity of transmitters, receivers, processors, controllers, memories, transceivers, or the like, and all network devices that can implement the implementations of this application shall fall within the protection scope of the implementations of this application.

FIG 11 is a simplified schematic diagram of a possible design structure of a first STA1100 according to an implementation of this application. The first STA 1100 includes a transmitter 1101, a receiver 1102, and a processor 1103. The processor 1103 may also be a controller, and is represented as a "controller/processor 1103" in FIG 11. Optionally, the first STA 1100 may further include a modem processor 1104. The modem processor 1104 may include an encoder 1105, a modulator 1106, a decoder 1107, and a demodulator 1108.

In an example, the transmitter 1101 adjusts (for example, performs analog conversion, filtering, amplification, and up-conversion on) an output sample and generates an uplink signal. The uplink signal is transmitted to the network device in the foregoing implementations through an antenna. On a downlink, the antenna receives a downlink signal transmitted by the network device in the foregoing implementations. The receiver 1102 adjusts (for example, performs filtering, amplification, down-conversion, and digitalization on) the signal received from the antenna and provides an input sample. In the modem processor 1104, the encoder 1105 receives service data and a signaling message that are to be sent on an uplink, and processes (for example, formats, encodes, and interleaves) the service data and the signaling message. The modulator 1106 further processes (for example, performs symbol mapping and modulation on) encoded service data and an encoded signaling message, and provides an output sample. The demodulator 1108 processes (for example, demodulates) the input sample and provides a symbol estimate. The decoder 1107 processes (for example, de-interleaves and decodes) the symbol estimate, and provides decoded data and a decoded signaling message that are to be sent to the first STA 1100. The encoder 1108, the modulator 1106, the demodulator 1108, and the decoder 1107 may be implemented by the combined modem processor 1106. These units perform processing based on a radio access technology (for example, access technologies of LTE and other evolved systems) used in a radio access network. It should be noted that, when the first STA 1100 does not include the modem processor 1106, the foregoing functions of the modem processor 1106 may also be implemented by the processor 1103.

The processor 1103 controls and manages an action of the first STA 1100, and is configured to perform a processing process performed by the first STA 1100 in the foregoing implementations of this application. For example, the processor 1103 is further configured to perform the process in step 604 in FIG 6A and/or another process in the technical solutions described in this application.

Further, the first STA 1100 may further include a memory 1109. The memory 1109 is configured to store program code and data used for the first STA 1100.

A processor configured to perform a function of the foregoing network device or first STA in the implementations of this application may be a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processor may implement or execute various example logical blocks, modules, and circuits described with reference to content disclosed in the implementations of this application. Alternatively, the processor may be a combination implementing a computing function, for example, a combination including one or more microprocessors, or a combination of a DSP and a microprocessor.

Methods or algorithm steps described with reference to the content disclosed in the implementations of this application may be implemented by hardware, or may be implemented by a processor by executing a software instruction. The software instruction may include a corresponding software module. The software module may be stored in a random access memory (Random Access Memory, RAM), a flash memory, a read-only memory (Read Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. An example storage medium is coupled to a processor, so that the processor can read information from the storage medium and can write information into the storage medium. Certainly, the storage medium may be a component of the processor. The processor and the storage medium may be located in an ASIC. In addition, the ASIC may be located in the network device or the first STA. Certainly, the processor and the storage medium may exist in the network device or the first STA as discrete components.

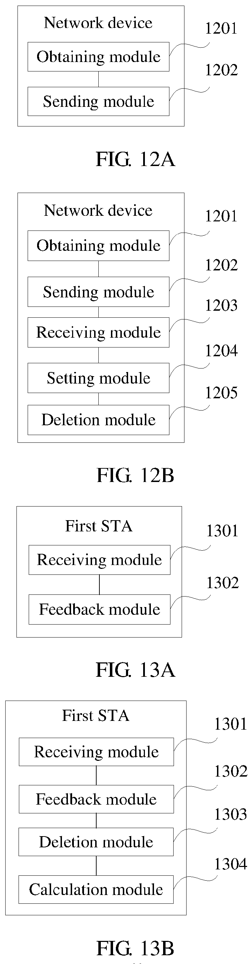

The network device described with reference to figures 12A-12B is not claimed as such in the present application.

FIG 12A is a block diagram of an acknowledgment frame delay duration setting apparatus according to an implementation of this application. The acknowledgment frame delay duration setting apparatus may be implemented as all or a part of a network device by using software, hardware, or a combination thereof. The acknowledgment frame delay duration setting apparatus may include an obtaining module 1201 and a sending module 1202.

The obtaining module 1201 is configured to implement the function of step 501.

The sending module 1202 is configured to implement the function of step 502.

For related details, refer to the foregoing method implementation.

In another optional implementation, the obtaining module is configured to implement the function of at least one of step 703, step 801, and step 803.

The sending module 1202 is configured to implement the function of at least one of step 603, step 607, step 608, step 611, step 702, step 704, step 705, step 802, and step 804.

FIG 12B is a block diagram of an acknowledgment frame delay duration setting apparatus according to an implementation of this application. The acknowledgment frame delay duration setting apparatus may include an obtaining module 1201, a sending module 1202, a receiving module 1203, a setting module 1204, and a deletion module 1205.

The receiving module 1203 is configured to implement the function of step 601.

The setting module 1204 is configured to implement the function of at least one of step 602 and step 701.

The deletion module 1205 is configured to implement the function of step 610.

It should be noted that, the obtaining module 1201 may be implemented by the processor 31 in FIG 3 by executing the obtaining module program 361 in the memory 34; the sending module 1202 may be implemented by the processor 31 in FIG 3 by executing the sending module program 362 in the memory 34; the receiving module 1203 may be implemented by the processor 31 in FIG 3 by executing the receiving module program 364 in the memory 34; the setting module 1204 may be implemented by the processor 31 in FIG 3 by executing the setting module program 363 in the memory 34; and the deletion module 1205 may be implemented by the processor 31 in FIG 3 by executing the deletion module program 365 in the memory 34.

FIG 13A is a block diagram of an acknowledgment frame delay duration setting apparatus according to another implementation of this application. The acknowledgment frame delay duration setting apparatus may be implemented as all or a part of a first STA by using software, hardware, or a combination thereof. The acknowledgment frame delay duration setting apparatus may include a receiving module 1301 and a feedback module 1302.

The receiving module 1301 is configured to implement the function of step 503.

The feedback module 1302 is configured to implement the function of step 504.

For related details, refer to the foregoing method implementation.

In another optional implementation, the receiving module 1301 is configured to implement the function of at least one of step 604 and step 706.

The feedback module 1302 is configured to implement the function of at least one of step 606, step 708, and step 709.

FIG 13B is a block diagram of an acknowledgment frame delay duration setting apparatus according to another implementation of this application. The acknowledgment frame delay duration setting apparatus may include a receiving module 1301, a feedback module 1302, a deletion module 1303, and a calculation module 1304.

The deletion module 1303 is configured to implement the function of step 609.

The calculation module 1304 is configured to implement the function of step 707.

It should be noted that, the receiving module 1301 may be implemented by the processor 41 in FIG 4 by executing the receiving module program 461 in the memory 44; the feedback module 1302 may be implemented by the processor 41 in FIG 4 by executing the feedback module program 462 in the memory 44; the deletion module 1303 may be implemented by the processor 41 in FIG 4 by executing the deletion module program 463 in the memory 44; and the calculation module 1304 may be implemented by the processor 41 in FIG 4 by executing the calculation module program 464 in the memory 44.

It should be noted that, when the acknowledgment frame delay duration setting apparatuses provided in the foregoing implementations set acknowledgment frame delay duration, only division of the foregoing functional modules is used as an example for description. During actual application, the foregoing functions can be allocated to different functional modules for implementation according to a requirement, to be specific, an inner structure of the network device is divided into different functional modules and an inner structure of the STA is divided into different functional modules, to implement all or some of the functions described above. In addition, the acknowledgment frame delay duration setting apparatuses provided in the foregoing implementations belong to a same concept as the acknowledgment frame delay duration setting method implementations. For specific implementation processes of the apparatuses, refer to the method implementations. Details are not described herein again.

The sequence numbers of the foregoing implementations of this application are merely for illustrative purposes, and are not intended to indicate priorities of the implementations.

A person of ordinary skill in the art may understand that all or some of the steps in the foregoing implementations may be implemented by hardware or a program instructing related hardware. The program may be stored in a computer-readable storage medium. The storage medium may be a read-only memory, a magnetic disk, an optical disc, or the like.

The scope of protection shall be defined by the appended claims.

## Claims

1. An acknowledgment frame delay duration setting method, wherein the method is applied to a first station, STA, and the method comprises
receiving (503) a first indication frame sent by a first access point, AP, and obtaining and storing first acknowledgment frame delay duration corresponding to the first STA that is carried in the first indication frame, wherein the first AP is an AP associated with the first STA; and
each time receiving a data frame sent by the first AP, feeding back (504) an acknowledgment frame to the first AP after a delay of the first acknowledgment frame delay duration;
wherein the first indication frame further carries a use count corresponding to the first acknowledgment frame delay duration, and the obtaining and storing first acknowledgment frame delay duration corresponding to the first STA that is carried in the first indication frame comprises:
obtaining and storing the first acknowledgment frame delay duration corresponding to the first STA and the use count corresponding to the first acknowledgment frame delay duration that are carried in the first indication frame; and
the feeding back an acknowledgment frame to the first AP after a delay of the first acknowledgment frame delay duration comprises:
subtracting 1 from the stored use count corresponding to the first acknowledgment frame delay duration; and
if a result obtained after 1 is subtracted from the use count corresponding to the first acknowledgment frame delay duration is less than 0, deleting the first acknowledgment frame delay duration and the use count corresponding to the first acknowledgment frame delay duration, and feeding back the acknowledgment frame to the first AP after a delay of default delay duration; or
if a result obtained after 1 is subtracted from the use count corresponding to the first acknowledgment frame delay duration is not less than 0, feeding back the acknowledgment frame to the first AP after a delay of the first acknowledgment frame delay duration.

2. The method according to claim 1, wherein the receiving a first indication frame sent by a first AP comprises:
receiving an aggregated frame sent by the first AP, to obtain the first indication frame and a data frame that are comprised in the aggregated frame, and feeding back an acknowledgment frame to the first AP after a delay of the first acknowledgment frame delay duration.

3. An acknowledgment frame delay duration setting apparatus, wherein the apparatus is applied to a first station, STA, and the apparatus comprises
a receiving module (1301), configured to: receive a first indication frame sent by a first access point, AP, and obtain and store first acknowledgment frame delay duration corresponding to the first STA that is carried in the first indication frame, wherein the first AP is an AP associated with the first STA; and
a feedback module (1302), configured to: each time a data frame sent by the first AP is received, feed back an acknowledgment frame to the first AP after a delay of the first acknowledgment frame delay duration;
wherein the first indication frame further carries a use count corresponding to the first acknowledgment frame delay duration, and the obtaining module is further configured to obtain and store the first acknowledgment frame delay duration corresponding to the first STA and the use count corresponding to the first acknowledgment frame delay duration that are carried in the first indication frame; and
the feedback module is further configured to:
subtract 1 from the stored use count corresponding to the first acknowledgment frame delay duration; and
if a result obtained after 1 is subtracted from the use count corresponding to the first acknowledgment frame delay duration is less than 0, delete the first acknowledgment frame delay duration and the use count corresponding to the first acknowledgment frame delay duration, and feed back the acknowledgment frame to the first AP after a delay of default delay duration; or
if a result obtained after 1 is subtracted from the use count corresponding to the first acknowledgment frame delay duration is not less than 0, feed back the acknowledgment frame to the first AP after a delay of the first acknowledgment frame delay duration.

4. The apparatus according to claim 3, wherein the receiving module is further configured to receive an aggregated frame sent by the first AP, to obtain the first indication frame and a data frame that are comprised in the aggregated frame, and the feedback module is further configured to feed back an acknowledgment frame to the first AP after a delay of the first acknowledgment frame delay duration.

## Patentansprüche

1. Verfahren zum Einstellen der Verzögerungsdauer eines Bestätigungsrahmens, wobei das Verfahren auf eine erste Station (first station - STA) angewendet wird, und das Verfahren Folgendes umfasst:
Empfangen (503) eines ersten Anzeigerahmens, der durch einen ersten Zugangspunkt (access point - AP) gesendet wird, und Erlangen und Speichern einer ersten Verzögerungsdauer des Bestätigungsrahmens entsprechend der ersten STA, die in dem ersten Anzeigerahmen getragen wird, wobei der erste AP ein AP ist, der mit der ersten STA assoziiert ist; und
bei jedem Empfangen eines durch den ersten AP gesendeten Datenrahmens, Rückmelden (504) eines Bestätigungsrahmens an den ersten AP nach einer Verzögerung der ersten Verzögerungsdauer des Bestätigungsrahmens;
wobei der erste Anzeigerahmen ferner eine Benutzungszählung entsprechend der ersten Verzögerungsdauer des Bestätigungsrahmens trägt, und Erlangen und Speichern der ersten Verzögerungsdauer des Bestätigungsrahmens entsprechend der ersten STA, die in dem ersten Anzeigerahmen getragen wird, Folgendes umfasst:
Erlangen und Speichern der ersten Verzögerungsdauer des Bestätigungsrahmens entsprechend der ersten STA und der Benutzungszählung entsprechend der ersten Verzögerungsdauer des Bestätigungsrahmens, die in dem ersten Anzeigerahmen getragen werden; und
Rückmelden eines Bestätigungsrahmens an den ersten AP nach einer Verzögerung der ersten Verzögerungsdauer des Bestätigungsrahmens Folgendes umfasst:
Subtrahieren von 1 von der gespeicherten Benutzungszählung entsprechend der ersten Verzögerungsdauer des Bestätigungsrahmens; und
falls ein Ergebnis, das nach Subtrahieren von 1 von der Benutzungszählung entsprechend der ersten Verzögerungsdauer des Bestätigungsrahmens erlangt wird, kleiner als 0 ist, Löschen der ersten Verzögerungsdauer des Bestätigungsrahmens und der Benutzungszählung entsprechend der ersten Verzögerungsdauer des Bestätigungsrahmens, und Rückmelden des Bestätigungsrahmens an den ersten AP nach einer Verzögerung von Standardverzögerungsdauer; oder
falls ein Ergebnis, das nach Subtrahieren von 1 von der Benutzungszählung entsprechend der ersten Verzögerungsdauer des Bestätigungsrahmens erlangt wird, nicht kleiner als 0 ist, Rückmelden des Bestätigungsrahmens an den ersten AP nach einer Verzögerung der ersten Verzögerungsdauer des Bestätigungsrahmens.

2. Verfahren gemäß Anspruch 1, wobei das Empfangen eines ersten Anzeigerahmens, der durch einen ersten AP gesendet wird, Folgendes umfasst:
Empfangen eines aggregierten Rahmens, der durch den ersten AP gesendet wird, um den ersten Anzeigerahmen und einen Datenrahmen zu erlangen, die in dem aggregierten Rahmen umfasst sind, und Rückmelden eines Bestätigungsrahmens an den ersten AP nach einer Verzögerung der ersten Verzögerungsdauer des Bestätigungsrahmens.

3. Vorrichtung zum Einstellen der Verzögerungsdauer eines Bestätigungsrahmens, wobei die Vorrichtung auf eine erste Station, STA, angewendet wird, und die Vorrichtung Folgendes umfasst:
ein Empfangsmodul (1301), das zu Folgendem konfiguriert ist: Empfangen eines ersten Anzeigerahmens, der durch einen ersten Zugangspunkt, AP, gesendet wird, und Erlangen und Speichern einer ersten Verzögerungsdauer des Bestätigungsrahmens entsprechend der ersten STA, die in dem ersten Anzeigerahmen getragen wird, wobei der erste AP ein AP ist, der mit der ersten STA assoziiert ist; und
ein Rückmeldemodul (1302), das zu Folgendem konfiguriert ist: bei jedem Empfangen eines durch den ersten AP gesendeten Datenrahmens, Rückmelden eines Bestätigungsrahmens an den ersten AP nach einer Verzögerung der ersten Verzögerungsdauer des Bestätigungsrahmens;
wobei der erste Anzeigerahmen ferner eine Benutzungszählung entsprechend der ersten Verzögerungsdauer des Bestätigungsrahmens trägt, und das Erlangungsmodul ferner dazu konfiguriert ist, die erste Verzögerungsdauer des Bestätigungsrahmens entsprechend der ersten STA und die Benutzungszählung entsprechend der ersten Verzögerungsdauer des Bestätigungsrahmens, die in dem ersten Anzeigerahmen getragen werden, zu erlangen und zu speichern; und
das Rückmeldemodul ferner zu Folgendem konfiguriert ist:
Subtrahieren von 1 von der gespeicherten Benutzungszählung entsprechend der ersten Verzögerungsdauer des Bestätigungsrahmens; und
falls ein Ergebnis, das nach Subtrahieren von 1 von der Benutzungszählung entsprechend der ersten Verzögerungsdauer des Bestätigungsrahmens erlangt wird, kleiner als 0 ist, Löschen der ersten Verzögerungsdauer des Bestätigungsrahmens und der Benutzungszählung entsprechend der ersten Verzögerungsdauer des Bestätigungsrahmens, und Rückmelden des Bestätigungsrahmens an den ersten AP nach einer Verzögerung von Standardverzögerungsdauer; oder
falls ein Ergebnis, das nach Subtrahieren von 1 von der Benutzungszählung entsprechend der ersten Verzögerungsdauer des Bestätigungsrahmens erlangt wird, nicht kleiner als 0 ist, Rückmelden des Bestätigungsrahmens an den ersten AP nach einer Verzögerung der ersten Verzögerungsdauer des Bestätigungsrahmens.

4. Vorrichtung gemäß Anspruch 3, wobei das Empfangsmodul ferner dazu konfiguriert ist, einen aggregierten Rahmen zu empfangen, der durch den ersten AP gesendet wird, um den ersten Anzeigerahmen und einen Datenrahmen zu erlangen, die in dem aggregierten Rahmen umfasst sind, und das Rückmeldungsmodul ferner dazu konfiguriert ist, einen Bestätigungsrahmen an den ersten AP nach einer Verzögerung der ersten Verzögerungsdauer des Bestätigungsrahmens rückzumelden.

## Revendications

1. Procédé de réglage de durée de retard de trame d'accusé de réception, dans lequel le procédé est appliqué à une première station, STA, et le procédé comprend :
la réception (503) d'une première trame d'indication envoyée par un premier point d'accès, AP, et l'obtention et le stockage d'une première durée de retard de trame d'accusé de réception correspondant à la première STA qui est transportée dans la première trame d'indication, dans lequel le premier AP est un AP associé à la première STA ; et
à chaque réception d'une trame de données envoyée par le premier AP, le renvoi (504) d'une trame d'accusé de réception au premier AP après un retard de la première durée de retard de trame d'accusé de réception ;
dans lequel la première trame d'indication transporte également un compte d'utilisation correspondant à la première durée de retard de trame d'accusé de réception, et l'obtention et le stockage de la première durée de retard de trame d'accusé de réception correspondant à la première STA qui est transportée dans la première trame d'indication comprennent :
l'obtention et le stockage de la première durée de retard de trame d'accusé de réception correspondant à la première STA et du compte d'utilisation correspondant à la première durée de retard de trame d'accusé de réception qui sont transportés dans la première trame d'indication ; et
le renvoi d'une trame d'accusé de réception au premier AP après une première durée de retard de trame d'accusé de réception comprend :
la soustraction de 1 du compte d'utilisation stocké correspondant à la première durée de retard de trame d'accusé de réception ; et
si un résultat obtenu après que 1 est soustrait du compte d'utilisation correspondant à la première durée de retard de trame d'accusé de réception est inférieur à 0, la suppression de la première durée de retard de trame d'accusé de réception et du compte d'utilisation correspondant à la première durée de retard de trame d'accusé de réception, et le renvoi de la trame d'accusé de réception au premier AP après un retard d'une durée de retard par défaut ; ou
si un résultat obtenu après que 1 est soustrait du compte d'utilisation correspondant à la première durée de retard de trame d'accusé de réception n'est pas inférieur à 0, le renvoi de la trame d'accusé de réception au premier AP après un retard de la première durée de retard de trame d'accusé de réception.

2. Procédé selon la revendication 1, dans lequel la réception d'une première trame d'indication envoyée par un premier AP comprend :
la réception d'une trame agrégée envoyée par le premier AP, pour obtenir la première trame d'indication et une trame de données qui sont comprises dans la trame agrégée, et le renvoi d'une trame d'accusé de réception au premier AP après un retard de la première durée de retard de trame d'accusé de réception.

3. Appareil de réglage de durée de retard de trame d'accusé de réception, dans lequel l'appareil est appliqué à une première station, STA, et l'appareil comprend :
un module de réception (1301), configuré pour : recevoir une première trame d'indication envoyée par un premier point d'accès, AP, et obtenir et stocker une première durée de retard de trame d'accusé de réception correspondant à la première STA qui est transportée dans la première trame d'indication, dans lequel le premier AP est un AP associé à la première STA ; et
un module de renvoi (1302), configuré pour : chaque fois qu'une trame de données envoyée par le premier AP est reçue, renvoyer une trame d'accusé de réception au premier AP après un retard de la première durée de retard de trame d'accusé de réception ;
dans lequel la première trame d'indication transporte également un compte d'utilisation correspondant à la première durée de retard de trame d'accusé de réception, et le module d'obtention est également configuré pour obtenir et stocker la première durée de retard de trame d'accusé de réception correspondant à la première STA et le compte d'utilisation correspondant à première durée de retard de trame d'accusé de réception transportée dans la première trame d'indication ; et
le module de renvoi est également configuré pour :
soustraire 1 du compte d'utilisation stocké correspondant à la première durée de retard de trame d'accusé de réception ; et
si un résultat obtenu après que 1 est soustrait du compte d'utilisation correspondant à la première durée de retard de trame d'accusé de réception est inférieur à 0, supprimer la première durée de retard de trame d'accusé de réception et le compte d'utilisation correspondant à la première durée de retard de trame d'accusé de réception, et renvoyer la trame d'accusé de réception au premier AP après un retard d'une durée de retard par défaut ; ou
si un résultat obtenu après que 1 est soustrait du compte d'utilisation correspondant à la première durée de retard de trame d'accusé de réception n'est pas inférieur à 0, renvoyer la trame d'accusé de réception au premier AP après un retard de la première durée de retard de trame d'accusé de réception.

4. Appareil selon la revendication 3, dans lequel le module de réception est également configuré pour recevoir une trame agrégée envoyée par le premier AP, pour obtenir la première trame d'indication et une trame de données qui sont comprises dans la trame agrégée, et le module de renvoi est configuré également pour renvoyer une trame d'accusé de réception au premier AP après un retard de la première durée de retard de trame d'accusé de réception.
